# EUROPÄISCHE PATENTSCHRIFT

(11) **EP 2 900 581 B1**
(45) Veröffentlichungstag und Bekanntmachung des Hinweises auf die Patenterteilung: **14.09.2016**
(21) Anmeldenummer: 13770860.8
(22) Anmeldetag: 19.09.2013
(51) Int. Cl.: B66B 5/00

(54) **VERFAHREN ZUR RÜCKSTELLUNG EINES SICHERHEITSSYSTEMS EINER AUFZUGSANLAGE**
METHOD FOR RESETTING A SAFETY SYSTEM OF AN ELEVATOR INSTALLATION
PROCÉDÉ POUR REMETTRE UN SYSTÈME DE SÉCURITÉ D'UNE INSTALLATION D'ASCENSEUR

(30) Priorität: 25.09.2012 EP 12185777
(43) Veröffentlichungstag der Anmeldung: 05.08.2015
(73) Patentinhaber: Inventio AG, 6052 Hergiswil (CH)
(72) Erfinder: LUSTENBERGER, Ivo, CH-6018 Buttisholz (CH)
(86) Internationale Anmeldenummer: PCT/EP2013/069450
(87) Internationale Veröffentlichungsnummer: WO 2014/048826

(56) Entgegenhaltungen:
- EP-A1- 2 336 070
- JP-A- 2002 160 872
- JP-A- 2004 099 301
- JP-A- 2011 256 006
- US-A1- 2004 094 366
- US-A1- 2009 133 969
- US-A1- 2009 218 178

## Beschreibung

Die Erfindung betrifft ein Verfahren zur Rückstellung eines Sicherheitssystems einer Aufzugsanlage von einem Ist-Zustand in einen Soll-Zustand, insbesondere in einen Normzustand, in welchem ein Normalbetrieb der Aufzugsanlage vom Sicherheitssystem freigegeben ist, sowie eine Aufzugsanlage gemäss dem Oberbegriff der unabhängigen Ansprüche.

Die JP 2004099301 beschreibt ein Verfahren bei dem eine Aufzugsanlage in einen Ruhemodus gebracht werden kann. Ein Installateur kann über ein Mobiltelefon einen Authentifizierungscode an eine Steuereinheit senden. Wenn dieser Authentifizierungscode mit einem gespeicherten Code übereinstimmt, wird der Ruhemodus aktiviert.

Die JP 2011256006, JP2002160872 und US 2009/0133969 A1 beschreiben Verfahren bei denen eine Aufzugsanlage in einen Wartungsmodus gebracht werden kann. Ein Installateur kann über ein Bedienfeld einen Authentifizierungscode eingeben. Wenn dieser Authentifizierungscode mit einem gespeicherten Code übereinstimmt, wird der Wartungsmodus aktiviert.

Die EP 2 336 070 A1 beschreibt ein Verfahren zur Wiederinbetriebnahme einer Aufzugsanlage nach einem Tausch eines Bauteils. Dazu muss ein Monteur einen Freigabecode eingeben, wobei die Eingabe über eine Tastatur, eine Codekarte oder ähnliches erfolgen kann. Nach Eingabe des korrekten Freigabecodes kann ein Normalbetrieb wieder aufgenommen werden.

Aufzugsanlagen weisen ein Sicherheitssystem zur Gewährleistung einer ausreichenden Betriebssicherheit auf. Die Anforderungen sind durch diverse Normen und Vorschriften festgelegt. Diese Sicherheitssysteme sind in der Regel weitgehend unabhängig ausgebildet und den übrigen Aufzugssystemen übergeordnet. Das Sicherheitssystem kann Einfluss auf die Aufzugsanlage nehmen und steht hierzu z.B. mit dem Antrieb oder der Bremseinheit der Aufzugsanlage in Verbindung. Ist keine ausreichende Betriebssicherheit gewährleistet, wird der Fahrbetrieb unterbrochen.

Ein derartiges Sicherheitssystem kann als Sicherheitskreis ausgebildet sein, bei dem mehrere Sicherheitselemente, wie zum Beispiel Sicherheitskontakte und -schalter, in einer Serienschaltung angeordnet sind. Die Kontakte überwachen zum Beispiel, ob eine Schachttüre oder die Kabinentüre geöffnet ist. Die Aufzugskabine kann nur bewegt werden, wenn der Sicherheitskreis und damit auch alle in ihm integrierten Sicherheitskontakte geschlossen sind. Einige der Sicherheitselemente werden von den Türen betätigt. Andere Sicherheitselemente, wie zum Beispiel ein Überfahrschalter, werden durch die Aufzugskabine betätigt oder ausgelöst. Der Sicherheitskreis unterbricht den Fahrbetrieb, falls der Sicherheitskreis geöffnet wird.

Sicherheitssysteme mit Sicherheitskreisen dieser Art sind mit zahlreichen Nachteilen behaftet, wie z.B. inhärenten Probleme eines Spannungsabfalls im Sicherheitskreis sowie einer verhältnismässig hohen Störanfälligkeit. Zudem erlaubt der Sicherheitskreis keine spezifische Diagnose, da bei offenem Sicherheitskreis nur festgestellt wird, dass mindestens ein Sicherheitskontakt geöffnet ist.

Es wurde daher vorgeschlagen, Aufzugsanlagen statt mit dem erwähnten Sicherheitskreis mit einem Sicherheitsbussystem auszurüsten. Das Sicherheitsbussystem weist typischerweise eine Steuereinheit, einen Sicherheitsbus und einen oder mehrere Busknoten auf. Verschiedene Sicherheitselemente wie z.B. Türkontakte, Riegelkontakte oder Pufferkontakte werden über die Busknoten abgefragt. Entspricht eine Rückmeldung der Sicherheitselemente nicht einer Sollgrösse, kann das Sicherheitssystem auf die Steuerung der Aufzugsanlage Einfluss nehmen und z.B. eine Notabschaltung einleiten. Das Sicherheitssystem kann dabei in einen Ausnahmezustand gelangen, in welchem ein Betrieb der Aufzugsanlage z.B. gesperrt oder nur in reduziertem Masse möglich ist. Typische Ausnahmezustände umfassen z.B. eine Notabschaltung, beispielsweise infolge einer Geschwindigkeitsüberschreitung der Aufzugskabine oder einer nicht geschlossenen Türe, oder einen Wartungszustand, in welchem nur Wartungsfahrten möglich sind. Ein derartiges Sicherheitssystem ist z.B. in WO 03/024856 A beschrieben.

Gelangt das Sicherheitssystem in einen Ausnahmezustand, ist eine Rückstellung des Sicherheitssystems in einen Normzustand erforderlich, in welchem ein normaler Betrieb der Aufzugsanlage freigegeben ist. Oft wird das Sicherheitssystem nach erfolgreicher Prüfung der Aufzugsanlage von einem Service-Fachmann in den Normzustand zurückgestellt ("reset"). Die Rückstellung kann dabei z.B. direkt an einem Zugangspunkt des Sicherheitssystems erfolgen. Dieser kann beispielsweise in einem abgeschlossenen Wartungsraum angeordnet sein, um sicherzustellen, dass nur eine befugte Person die Rückstellung auslösen kann. Das Sicherheitssystem ist damit aber oft schwierig zugänglich, womit die Rückstellung zeitaufwändig und z.B. für den Service-Fachmann unkomfortabel sein kann. Eine Rückstellung könnte in gewissen Fällen auch automatisch von einer Aufzugssteuerung durchgeführt werden. Allerdings wäre in diesem Fall oft die erforderliche Sicherheitsstufe für eine Rückstellung nicht gewährleistet, da eine Aufzugssteuerung als unsicheres System dem Sicherheitssystem in einer Sicherheitshierarchie untergeordnet ist.

Es ist daher die Aufgabe der Erfindung, ein Verfahren sowie eine Aufzugsanlage mit einem Sicherheitssystem bereitzustellen, welche einen effizienten und sicheren Betrieb der Aufzugsanlage ermöglichen. Weiter ist es eine Aufgabe der Erfindung, ein Verfahren sowie eine Aufzugsanlage mit einem Sicherheitssystem bereitzustellen, welche eine komfortable und einfache Rückstellung des Sicherheitssystems bei ausreichender Sicherheit vor z.B. Missbrauch, Vandalismus, Fehlbedienung oder Fehlfunktionen ermöglichen.

Diese Aufgaben werden durch die Merkmale der unabhängigen Ansprüche gelöst. Anspruch 1 betrifft ein Verfahren zur Rückstellung eines Sicherheitssystems einer Aufzugsanlage aus einem Ist-Zustand, in welchem ein Normalbetrieb der Aufzugsanlage nicht freigegeben ist, in einen Soll-Zustand, in welchem ein Normalbetrieb der Aufzugsanlage vom Sicherheitssystem freigegeben ist, wobei das Sicherheitssystem über wenigstens eine Kommunikationsschnittstelle zum Datenaustausch mit einem der Aufzugsanlage zugeordneten, insbesondere nicht zum Sicherheitssystem gehörigen, Kontrollsystem verbunden ist. Das Verfahren umfasst die Schritte:
- Empfangen einer aus dem Kontrollsystem übermittelten Rückstellanfrage zur Rückstellung vom Ist-Zustand in den Soll-Zustand im Sicherheitssystem;
- Durchführung einer Verifizierung der Rückstellanfrage durch das Sicherheitssystem;
- Bewertung der Verifizierung durch das Sicherheitssystem;
- Rückstellung des Sicherheitssystems vom Ist-Zustand in den Soll-Zustand, wenn die Verifizierung vom Sicherheitssystem als gültig bewertet ist.

Erfindungsgemäss umfasst die Durchführung der Verifizierung die Schritte
- Übermitteln einer Verifizierungsanfrage (66), insbesondere eines Fragekodes, vom Sicherheitssystem (10) an das Kontrollsystem (20) infolge der empfangenden Rückstellanfrage,
- Empfangen einer vom Kontrollsystem (20) übermittelten Verifizierungsantwort (70), insbesondere eines Antwortkodes, im Sicherheitssystem (10).

Zusätzlich wird die Verifizierungsanfrage vom Sicherheitssystem zu jeder Rückstellanfrage neu erzeugt. Mittels dieses Verfahrens ist gewährleistet, dass die Rückstellung des Sicherheitssystems Akt einer gezielten Handlung darstellt und sicher erfolgt. Insbesondere kann die Rückstellung des Sicherheitssystems durch unbefugtes Personal oder durch eine Fehlfunktion, beispielsweise bei einer zufällig generierten Rückstellanfrage, ausgeschlossen werden. Entsprechend stellt das Verfahren sicher, dass bei Aufnahme des Normbetriebs der Aufzugsanlage das Sicherheitssystem zuverlässig in Betrieb genommen wird.

Mit Ist-Zustand ist ein momentaner Zustand des Sicherheitssystems bezeichnet, aus welchem es mit der übermittelten Rückstellanfrage in den Soll-Zustand zurückgestellt werden soll. Der Ist-Zustand ist typischerweise ein Ausnahmezustand, in welchem ein Normalbetrieb der Aufzugsanlage nicht freigegeben ist. Der Ist-Zustand kann z.B. ein Zustand sein, in welchem sich das Sicherheitssystem z.B. infolge einer Fehlfunktion oder bei einer Wartung der Aufzugsanlage befindet.

Der Soll-Zustand bezeichnet einen Zustand, in welchen das Sicherheitssystem aufgrund der Rückstellanfrage übergehen soll. Insbesondere ist der Soll-Zustand ein Normzustand, in welchem ein normaler Betrieb der Aufzugsanlage ermöglicht ist. In diesem Fall ist eine Verifizierung der Rückstellanfrage besonders wesentlich, um die Sicherheit während des Normalbetriebs zu gewährleisten. Es versteht sich, aber ist nicht in dem erfindungsgemässen Verfahren enthalten, dass je nach Erfordernis der Ist-Zustand auch ein Normzustand sein kann und der Soll-Zustand ein Ausnahmezustand. Insbesondere kann der Soll-Zustand z.B. auch ein Wartungszustand sein, in welchem nur Wartungsfahrten möglich sind.

Das Kontrollsystem kann sowohl interne, zur Aufzugsanlage gehörige Komponenten sowie externe Komponenten umfassen. Interne Komponenten können beispielsweise ortsgebundene oder mobile Kontrolleinheiten der Aufzugsanlage sein. Insbesondere kann das Kontrollsystem z.B. Teile einer Aufzugsteuerung der Aufzugsanlage umfassen. Mobile Kontrolleinheiten wie z.B. tragbare Wartungs- oder Diagnosegeräte oder Mobiletelefone können z.B. über ein internes kabelgestütztes oder kabelloses Netzwerk angebunden bzw. anbindbar sein. Die Kontrolleinheiten können je nach Erfordernis z.B. Mittel zum Auslesen oder Darstellen von Daten wie z.B. ein Display und/oder Mittel zur Eingabe von Daten wie z.B. ein Tastenfeld oder einen Touchscreen umfassen.

Externe Komponenten des Kontrollsystems können beispielsweise über ein externes, allenfalls öffentliches, Netzwerk angebunden sein. Beispielsweise kann ein Mobiltelefon, welches über ein Mobilfunknetz an das Kontrollsystem angebunden ist, oder ein Computer, welcher über das Internet angebunden ist, einen Teil des Kontrollsystems bilden. Das Kontrollsystem kann hierzu eine Schnittstelleneinheit zur Anbindung an das entsprechende externe Netzwerk aufweisen.

Die wenigstens eine Kommunikationsschnittstelle kann z.B. einen über ein Kabel geführten Kommunikationsbus (z.B. CAN-Bus, "Controller Area Network") umfassen. Ebenso kann die Kommunikationsschnittstelle aber auch ein internes, zur Aufzugsanlage gehöriges kabelloses Netzwerk (z.B. WLAN-Netzwerk, "Wireless Local Area Network") oder eine Anbindung an ein externes, öffentliches kabelloses oder kabelgestütztes Netzwerk umfassen. Es versteht sich, dass das Kontrollsystem bzw. dessen Komponenten über eine oder mehrere Kommunikationsschnittstellen an das Sicherheitssystem angebunden sein können.

Die Rückstellanfrage bezeichnet eine Rückstellanfrage zur Rückstellung vom Ist-Zustand in den Soll-Zustand. Die Übermittlung der Rückstellanfrage an das Sicherheitssystem kann durch einen Benutzer oder durch ein System der Aufzugsanlage ausgelöst werden (im Folgenden allgemein mit "Auslöser" bezeichnet). Bei der Übermittlung der Rückstellanfrage können gegebenenfalls zusätzliche Daten an das Sicherheitssystem gesendet werden wie z.B. der gewünschte Soll-Zustand oder gegebenenfalls Daten des Auslösers. Die Rückstellanfrage kann über eine interne oder externe Komponente des Kontrollsystems an das Sicherheitssystem übermittelt werden

Mit Verifizierung ist grundsätzlich jede Art einer Bestätigung der Gültigkeit der Rückstellanfrage bezeichnet. Die Verifizierung kann dabei mit Vorteil auch eine Authentifizierung umfassen, wobei zusätzlich eine Berechtigung oder eine Identität z.B. des Auslösers geprüft wird. Selbstverständlich erfolgt die Rückstellung des Sicherheitssystems in den Soll-Zustand erfindungsgemäss in der Regel auch bei gültiger Verifizierung nur dann, wenn das Sicherheitssystem eine Rückstellung in den Soll-Zustand als sicher bewertet bzw. der Soll-Zustand durch das Sicherheitssystem zugelassen ist. In gewissen Ausführungsformen kann es vorteilhaft sein, dass die Verifizierung der Rückstellanfrage vom Sicherheitssystem nur dann durchgeführt wird, falls der Soll-Zustand als sicher bewertet ist. Anderenfalls kann das Sicherheitssystem infolge der Rückstellanfrage z.B. ein Alarmsignal auslösen.

Aufgrund der erfindungsgemässen Verifizierung kann sichergestellt werden, dass die Rückstellung nicht durch Fehlfunktion eines Aufzugssystems, versehentlich durch einen Benutzer oder vorsätzlich durch Unbefugte ausgelöst werden kann. Das Kontrollsystem kann daher auch Teil eines unsicheren Systems der Aufzugsanlage sein, d.h. eines Systems, welches dem Sicherheitssystem hierarchisch untergeordnet ist, und muss insbesondere keinen Teil des Sicherheitssystems bilden. Im Falle einer mobilen Kontrolleinheit, welche vom Benutzer bei sich getragen wird, kann die Anbindung an das Sicherheitssystem erfindungsgemäss sogar über ein ungesichertes öffentliches Netzwerk wie z.B. ein Mobilfunknetz erfolgen.

Die Durchführung der Verifizierung erfolgt nach Art einer Frage/Antwort-Verifizierung, bei welcher eine Verifizierungsanfrage direkt oder indirekt an ein System oder einen Benutzer übermittelt wird (im Folgenden gesamthaft mit "Empfänger" bezeichnet), welcher bzw. welches die Anfrage mit einer Verifizierungsantwort bestätigen muss. Insbesondere umfasst die Durchführung der Verifizierung das Übermitteln einer Verifizierungsanfrage, insbesondere eines Fragekodes, vom Sicherheitssystem an das Kontrollsystem infolge der empfangenen Rückstellanfrage, sowie das Empfangen einer vom Kontrollsystem übermittelten Verifizierungsantwort, insbesondere eines Antwortkodes, im Sicherheitssystem.

Die Verifizierungsanfrage kann ein einfaches Signal des Sicherheitssystems wie beispielsweise das Aufleuchten eines Knopfes an einem Tastaturfeld im Kontrollsystem sein, welcher zur Bestätigung als Verifizierungsantwort z.B. von einem Benutzer gedrückt werden muss. Bevorzugt umfasst die Verifizierungsanfrage für eine erhöhte Sicherheit jedoch einen Fragekode und/oder die Verifizierungsantwort einen Antwortkode. Der Fragekode und/oder der Antwortkode können je nach Anforderung verschiedene Komplexitätsgrade haben und z.B. eine alphanumerische oder binäre Zeichenfolge umfassen. Ebenso können der Fragekode und/oder der Antwortkode auch eine bildliche Darstellung wie beispielsweise Symbole oder einen Balken- bzw. Doppel-Matrixkode umfassen. Fragekode und Antwortkode können identisch sein, wobei beispielsweise der vom Sicherheitssystem übermittelte Fragekode zur Verifizierungsantwort vom Empfänger identisch an das Sicherheitssystem zurück übermittelt wird. Fragekode und Antwortkode sind bevorzugt derart beschaffen, dass der korrekte Antwortkode nur in Kenntnis des Fragekodes an das Sicherheitssystem übermittelt werden kann.

Als Antwortkodes können z.B. auch von der Verifizierungsanfrage unabhängige Verifizierungsantworten zum Einsatz kommen wie z.B. eine Authentifizierung durch einen kodifizierten Fingerabdruck oder einen Iris-Scan eines Benutzers.

Es versteht sich, dass der Empfänger der Verifizierungsanfrage und der Auslöser voneinander verschieden sein können, d.h. die Verifizierungsanfrage nicht an den Auslöser der Rückstellanfrage gerichtet zu sein braucht. Die Rückstellanfrage kann beispielsweise von einer ortsgebundenen Kontrolleinheit des Kontrollsystems an das Sicherheitssystem übermittelt werden (Auslöser), während die Verifizierungsanfrage an ein mobiles Kontrollgerät des Kontrollsystems, welches ein Service-Fachmann bei sich trägt, übermittelt wird (Empfänger). Weitere Variationen erschliessen sich unmittelbar.

Die Verifizierungsanfrage wird vom Sicherheitssystem zu jeder Rückstellanfrage neu, insbesondere zufällig, erzeugt.
Auf diese Weise unterscheiden sich Verifizierungsanfragen zu aufeinander folgenden Rückstellanfragen voneinander. Auf diese Weise kann verhindert werden, dass z.B. bei kurzer Folge von Rückstellanfragen eine Verifizierung der falschen Rückstellanfrage zugeordnet wird.

Falls die Verifizierungsanfrage, insbesondere gegebenenfalls der Fragekode, zufällig erzeugt wird, kann als Basis zur Erzeugung ein herkömmlicher Zufallsgenerator dienen. Derartige Zufallsgeneratoren können hardware- oder softwaremässig im Sicherheitssystem implementiert sein. In Varianten kann der Fragekode auch auf anderen Faktoren wie z.B. dem aktuellen Datum und Uhrzeit basieren. Ebenso kann die Verifizierungsanfrage sowie eine Soll-Verifizierungsantwort zur Erzeugung nach Art einer Streichliste aus einer im Sicherheitssystem gespeicherten Liste entnommen werden. Beim Empfänger der Verifizierungsanfrage kann in diesem Fall eine entsprechende Streichliste mit Antwortkodes hinterlegt sein. Derartige Streichlisten können z.B. bei der Wartung mit einem Firmware-Update erneuert werden.

Um die Sicherheitsstufe weiter zu erhöhen, ist mit Vorteil die Verifizierungsanfrage zu jeder Rückstellanfrage einzigartig. Auf diese Weise ist sichergestellt, dass die Verifizierungsanfrage zu jeder Rückstellanfrage eindeutig definiert ist.

Die Durchführung der Verifizierung könnte auch das Auslesen eines Verifizierungskodes umfassen, welcher direkt mit der Rückstellanfrage an das Sicherheitssystem übermittelt wird. Der Verifizierungskode kann dabei vom Auslöser der Rückstellanfrage vor bzw. bei der Übermittlung der Rückstellanfrage eingegeben bzw. erzeugt werden. Zur Verifizierung der Rückstellanfrage kann das Sicherheitssystem den Verifizierungskode z.B. mit einem im Sicherheitssystem gespeicherten oder von diesem erzeugten Soll-Verifizierungskode vergleichen. Beispielsweise kann der Verifizierungskode beim Auslösen bzw. beim Empfangen der Rückstellanfrage nach Art einer Streichliste aus einer gespeicherten Liste entnommen werden. Derartige Systeme können beispielsweise eine manuelle Auswahl aus einer gedruckten Liste erfordern oder elektronisch in Chipkarten, Dongles oder anderen mobilen Freigabevorrichtungen implementiert sein, welche an das Kontrollsystem z.B. an eine Schnittstelle einer Kontrolleinheit anschliessbar sind.

Denkbar wären auch zeitlich synchronisierte Systeme, welche beim Auslöser sowie im Sicherheitssystem Verifizierungskodes erzeugen, welche nur in beschränkten, synchronisierten Zeitfenstern gültig sind. Verifizierungskodes könnten aber auch eine einfache persönliche Identifizierungsnummer (PIN) oder andere statische Kodes umfassen, welche nur einem berechtigten Auslöser bekannt sind. Ebenfalls denkbar wäre z.B. ein Fingerabdruck oder Iris-Scan eines Benutzers, welcher zur Auslösung der Rückstellanfrage aufgenommen und mit der Rückstellanfrage in kodifizierter Form übermittelt wird. Dem Fachmann erschliessen sich unmittelbar weitere Möglichkeiten, zur Verifizierung bei Übermittlung der Rückstellanfrage.

Vorzugsweise umfasst die Bewertung der Verifizierung ein Vergleichen der Verifizierungsantwort mit einer Soll-Verifizierungsantwort, sowie ein Bewerten der Verifizierung als gültig, wenn die Verifizierungsantwort mit der Soll-Verifizierungsantwort übereinstimmt. Falls die Verifizierungsantwort einen Antwortkode umfasst, weist die Soll-Verifizierungsantwort bevorzugt einen Soll-Antwortkode auf.

Bevorzugt ist dabei jeder Verifizierungsanfrage genau eine Soll-Verifizierungsantwort zugeordnet. In diesem Fall kann zu jeder Rückstellanfrage eine eindeutig definierte Kombination von Verifizierungsanfrage und Verifizierungsantwort bzw. Soll-Verifizierungsantwort zur Anwendung kommen. Damit kann sichergestellt werden, dass keine zuvor benutzten Verifizierungsanfragen oder -antworten bzw. gegebenenfalls entsprechende Fragekodes oder Antwortkodes in einem System vorhanden sein können, welche zu irrtümlichen oder vorsätzlich ungültigen Verifizierungen führen können.

In Varianten ist es selbstverständlich denkbar, dass z.B. immer dieselbe Verifizierungsanfrage zum Einsatz kommt und eine jeweils individuelle Soll-Verifizierungsantwort in Abhängigkeit von anderen Faktoren wie z.B. vom aktuellen Datum und/oder Uhrzeit bestimmt ist.

Mit Vorteil wird die Soll-Verifizierungsantwort vom Sicherheitssystem gemäss einer Regel, insbesondere einer Verschlüsselung, aus der Verifizierungsanfrage erzeugt. In diesem Fall muss der Empfänger, welcher den Antwortkode an das Sicherheitssystem übermittelt, dieselbe Regel benutzen, um die korrekte Verifizierungsantwort zu erzeugen, d.h. die Verifizierungsantwort, welche der Soll-Verifizierungsantwort entspricht. Die Regel kann ein einfaches Set von Regeln umfassen, welches z.B. direkt von einem Benutzer angewendet werden kann. Die Regel kann aber auch eine komplexe Verschlüsselung umfassen, welche z.B. elektronisch implementiert ist.

Je nach Anwendung kann es vorteilhaft sein, die Soll-Verifizierungsantwort im Sicherheitssystem erst nach Empfangen der Verifizierungsantwort aus der Verifizierungsanfrage zu erzeugen. Dies hat den Vorteil, dass im Zeitintervall zwischen

Übermittelung der Rückstellanfrage und der Verifizierungsantwort keine Soll-Verifizierungsantwort im Sicherheitssystem vorliegt, welche ausgelesen und/oder fehlgeleitet werden könnte. Alternativ kann die Soll-Verifizierungsantwort zusammen mit der Verifizierungsanfrage erzeugt und zumindest bis zur Übermittlung der Verifizierungsantwort in einem Speicher des Sicherheitssystems abgelegt werden.

Bevorzugt umfasst das Kontrollsystem zumindest eine der folgenden Kontrolleinheiten:
- eine ortsgebundene Kontrolleinheit, insbesondere eine Bedieneinheit oder eine Steuereinheit einer Aufzugssteuerung,
- eine mobile Kontrolleinheit, welche über das Kontrollsystem an das Sicherheitssystem angebunden bzw. anbindbar ist, wobei bevorzugt das Kontrollsystem eine Anbindung an ein internes oder externes drahtloses Netzwerk umfasst, über welches die mobile Kontrolleinheit angebunden bzw. anbindbar ist.

Dabei werden mit Vorteil
- die Verifizierungsanfrage vom Sicherheitssystem an die zumindest eine Kontrolleinheit und
- die Verifizierungsantwort von der zumindest einen Kontrolleinheit oder von einer weiteren Kontrolleinheit des Kontrollsystems an das Sicherheitssystem übermittelt.

Die ortsgebundene Kontrolleinheit kann ein internes System der Aufzugsanlage sein und einen Teil einer Aufzugssteuerung wie z.B. eine Steuereinheit umfassen. Die ortsgebundene Kontrolleinheit kann aber auch Teile eines externen Systems umfassen bzw. durch ein externes System bereitgestellt sein. Denkbar ist beispielsweise ein Wartungssystem einer Wartungszentrale des Anlagenbetreibers für z.B. mehrere Aufzugsanlagen. Falls externe Systeme umfasst sind, kann die wenigstes eine Kommunikationsschnittstelle und/oder das Kontrollsystem eine Schnittstelle zur Anbindung an ein externes Netzwerk wie z.B. das Internet oder ein Mobilfunknetz aufweisen. "Ortsgebunden" bezeichnet hier sowohl eine stationäre, d.h. unbewegte, Anordnung oder eine feste Anordnung an bewegten Komponenten der Aufzugsanlage wie es z.B. bei einem Bedienpanel in einer Aufzugskabine der Fall sein kann.

Die ortsgebundene Kontrolleinheit kann Mittel aufweisen, um die Verifizierungsantwort infolge einer Übermittlung der Verifizierungsanfrage automatisch zu erzeugen und an das Sicherheitssystem zu übermitteln. Dies kann z.B. bei Steuereinheiten der Aufzugssteuerung vorteilhaft sein, um die Rückstellanfrage selbstständig verifizieren zu können. Die ortsgebundenen Kontrolleinheiten können auch Mittel zum Datenaustausch mit einem Benutzer und/oder zum Anschluss einer Freigabevorrichtung (siehe unten) aufweisen. Die ortsgebundene Kontrolleinheit kann z.B. eine in einer Aufzugskabine angeordnete Bedieneinheit umfassen. Die Bedieneinheit kann z.B. als Wartungseinheit hinter einem Wandpanel oder einem Wartungsfenster angeordnet sein. Die Bedieneinheit kann aber auch ein frei zugängliches Bedienpanel in der Aufzugskabine umfassen. Dabei kann z.B. ein ohnehin vorhandenes Display zur Darstellung der Verifizierungsanfrage genutzt werden, während ohnehin vorhandene Tasten zur manuellen Eingabe der Verifizierungsantwort dienen können. Auf diese Weise können ohnehin vorhandene Komponenten der Aufzugsanlage synergetisch genutzt werden.

Die mobile Kontrolleinheit kann z.B. von einem Benutzer auf sich getragen werden und ist zur Anbindung über das Kontrollsystem oder über die wenigstens eine Kommunikationsschnittstelle an das Sicherheitssystem ausgebildet. Hierzu kann das Kontrollsystem und/oder die Kommunikationsschnittstelle z.B. eine Anbindung an ein drahtloses internes Netzwerk wie z.B. ein WLAN-Netzwerk oder ein externes Netzwerk wie z.B. ein Mobilfunknetz aufweisen. Die mobile Kontrolleinheit kann aber auch über eine Steckverbindung an einer entsprechend ausgebildeten Schnittstelle (z.B. über eine weitere, ortsgebundene Kontrolleinheit) an das Kontrollsystem angeschlossen bzw. anschliessbar sein. Die mobile Kontrolleinheit kann Mittel zum Datenaustausch mit einem Benutzer oder zum Anschluss einer Freigabevorrichtung aufweisen (siehe unten). Die mobile Kontrolleinheit kann z.B. ein Diagnose- oder Wartungsgerät der Aufzugsanlage, ein Mobil-Telefon oder ein Tablet-Computer (so genannte "Tabs" oder "Pads") sein.

Die Verifizierungsanfrage wird bevorzugt vom Sicherheitssystem an die zumindest eine Kontrolleinheit übermittelt. Die Verifizierungsanfrage kann dort z.B. von einem Benutzer oder von einer an die zumindest eine Kontrolleinheit angeschlossenen Freigabevorrichtung ausgelesen werden. Die Übermittelung der Verifizierungsantwort an das Sicherheitssystem hat dabei nicht notwendig von derselben Kontrolleinheit aus zu erfolgen, sofern das Kontrollsystem mehr als eine Kontrolleinheiten umfasst. Insbesondere sind in diesem Fall grundsätzlich sämtliche Kombinationen der oben genannten Kontrolleinheiten denkbar, um über eine der Kontrolleinheiten die Verifizierungsanfrage vom Sicherheitssystem zu Empfangen und über eine weitere Kontrolleinheit an das Sicherheitssystem zu übermitteln.

Mit Vorteil umfasst die zumindest eine Kontrolleinheit wenigstens Mittel zum Auslesen der Verifizierungsanfrage und die Kontrolleinheit, von welcher die Verifizierungsantwort an das Sicherheitssystem übermittelt wird, wenigstens Mittel zur Eingabe der Verifizierungsantwort. Die Verifizierungsanfrage wird dabei über das Mittel zum Auslesen ausgelesen und die Verifizierungsantwort über das Mittel zur Eingabe eingegeben. Es versteht sich, dass im Falle nur einer Kontrolleinheit diese sowohl die Mittel zum Auslesen als auch die Mittel zur Eingabe aufweist.

Die Mittel zum Auslesen der Verifizierungsanfrage können dabei ein Display zur visuellen Darstellung der Verifizierungsanfrage umfassen, auf welchem z.B. der Fragekode angezeigt werden kann. Die Mittel zur Eingabe können ein Tastenfeld umfassen, über welches z.B. der Antwortkode manuell eingegeben werden kann. In diesem Fall kann die Verifizierungsanfrage von einem Benutzer ausgelesen, die Verifizierungsantwort erzeugt und vom Benutzer eingegeben werden. Es versteht sich, dass die Verifizierungsantwort vom Benutzer z.B. dabei über ein unabhängiges externes Gerät durch Eingabe der Verifizierungsanfrage erzeugt werden kann. Dabei kann die Verifizierungsantwort manuell vom externen Gerät auf die Kontrolleinheit übertragen werden, von welcher die Verifizierungsantwort an das Sicherheitssystem übermittelt wird.

Die Mittel zum Auslesen können aber auch eine Schnittstelle umfassen, über welche der Verifizierungskode von einer an die Schnittstelle anschliessbaren bzw. angeschlossenen Freigabevorrichtung auslesbar ist. In diesem Fall kann die Schnittstelle auch die Mittel zur Eingabe der Verifizierungsantwort bereitstellen, welche z.B. automatisch von der angeschlossenen Freigabevorrichtung erzeugt und an das Sicherheitssystem übermittelt wird. Die Freigabevorrichtung umfasst hierzu Mittel zur Erzeugung der Verifizierungsantwort aus der Verifizierungsanfrage, welche beispielsweise hardware- oder softwaremässig in einem Schaltkreis oder einer programmierbaren Recheneinheit implementiert sein können. Derartige Freigabevorrichtungen können z.B. Chipkarten, Dongles, USB-Sticks oder andere mobile Vorrichtungen umfassen, welche an die Schnittstelle angeschlossen werden können.

Je nach Art der Kontrolleinheit kann die zumindest eine Kontrolleinheit selbst Mittel zur Erzeugung einer Verifizierungsantwort aus der Verifizierungsanfrage aufweisen. Diese Mittel können z.B. einen Schaltkreis umfassen, in welchem z.B. eine Regel zur Erzeugung der Verifizierungsantwort oder eine Liste von Verifizierungsantworten hardware- oder softwaremässig implementiert sind. Bevorzugt wird in diesem Fall die Verifizierungsantwort automatisch bei Empfang der Verifizierungsanfrage von der zumindest einen Kontrolleinheit erzeugt und an das Sicherheitssystem übermittelt. Dies ist besonders vorteilhaft, falls die Kontrolleinheit eine Steuereinheit ist, welche die Rückstellanfrage ohne Interaktion durch einen Benutzer verifizieren kann. Die Mittel zur Erzeugung der Verifizierungsantwort können aber auch in anderen ortsgebundenen oder mobilen Kontrolleinheiten mit Vorteil vorhanden sein.

Zur Sicherheit kann zusätzlich vorgesehen sein, dass die Übermittlung der Verifizierungsantwort durch den Benutzer ausgelöst werden muss und die Übermittlung erst z.B. durch einen Schlüsselschalter oder einen zusätzliche Kodeabfrage auslösbar ist. Ebenso ist es denkbar, dass die Verifizierungsantwort erst infolge einer entsprechenden Eingabe aus der Verifizierungsanfrage erzeugt wird.

Bevorzugt muss die Durchführung der Verifizierung innerhalb eines vorgegebenen Zeitintervalls erfolgen, um vom Sicherheitssystem als gültig bewertet zu werden. Das Zeitintervall kann dabei mit der Rückstellanfrage ausgelöst werden oder erst mit der
Übermittlung der Verifizierungsanfrage durch das Sicherheitssystem. Verstreicht das vorgegebene Zeitintervall ohne dass die Verifikation abgeschlossen ist, ist in der Regel eine neue Rückstellanfrage erforderlich. Auf diese Weise wird verhindert, dass sich das Sicherheitssystem über längere Zeit in einem undefinierten Wartezustand befindet.
Die Erfindung betrifft auch eine Aufzugsanlage, insbesondere zur Durchführung eines erfindungsgemässen Verfahrens, umfassend ein Sicherheitssystem, welches aus einem Ist-Zustand, insbesondere aus einem Zustand, in welchem ein Normalbetrieb der Aufzugsanlage nicht freigegeben ist, in einen Soll-Zustand zurückstellbar ist, insbesondere in einen Normzustand, in welchem ein Normalbetrieb der Aufzugsanlage vom Sicherheitssystem freigegeben ist. Dabei ist das Sicherheitssystem über wenigstens eine Kommunikationsschnittstelle zum Datenaustausch an ein der Aufzugsanlage zugeordnetes, insbesondere nicht zum Sicherheitssystem gehöriges, Kontrollsystem angeschlossen. Die Aufzugsanlage zeichnet sich dadurch aus, dass das Sicherheitssystem Mittel zum Empfangen einer aus dem Kontrollsystem übermittelten Rückstellanfrage zur Rückstellung vom Ist-Zustand in den Soll-Zustand und Mittel zur Durchführung einer Verifizierung der Rückstellanfrage über das Kontrollsystem sowie Mittel zur Bewertung einer Gültigkeit der Verifizierung umfasst. Das Sicherheitssystem ist dabei derart ausgebildet, dass es sich infolge einer als gültig bewerteten Verifizierung vom Ist-Zustand in den Soll-Zustand rückstellt. Die Mittel zur Durchführung der Verifizierung umfassen Übertragungsmittel zur Übermittlung einer Verifizierungsanfrage an das Kontrollsystem sowie Empfangsmittel zum Empfangen einer Verifizierungsantwort vom Kontrollsystem. Ausserdem sind die Mittel zur Durchführung der Verifizierung dazu vorgesehen, die Verifizierungsanfrage vom Sicherheitssystem zu jeder Rückstellanfrage neu zu erzeugen.
Es erschliesst sich unmittelbar, dass die erfindungsgemässe Ausbildung der Aufzugsanlage z.B. durch eine entsprechende Programmierung von programmierbaren Steuereinheiten des Sicherheitssystems sowie des Kontrollsystems bzw. dessen Komponenten bereitgestellt werden kann. Dabei können ohnehin vorhandene Komponenten der Aufzugsanlage genutzt werden, wie z.B. ein Bedienspanel in einer Aufzugskabine, welches über einen herkömmlichen Kommunikationsbus wie z.B. einem CAN-Bus mit dem Sicherheitssystem verbunden ist.
Bevorzugt umfassen dabei die Mittel zur Durchführung der Verifizierung Übertragungsmittel zur Übermittlung einer Verifizierungsanfrage an das Kontrollsystem sowie Empfangsmittel zum Empfangen einer Verifizierungsantwort vom Kontrollsystem.
Mit Vorteil umfasst das Sicherheitssystem Mittel zur Erzeugung, insbesondere zur zufälligen Erzeugung, einer Verifizierungsanfrage, insbesondere eines Fragekodes, sowie Mittel zur Erzeugung einer der Verifizierungsanfrage zugeordneten Soll-Verifizierungsantwort, insbesondere eines dem Fragekode gemäss einer Regel oder eine Liste zugeordneten Soll-Antwortkodes. Dabei sind die Mittel zur Bewertung einer Gültigkeit der Verifizierung bevorzugt dazu ausgebildet, eine von dem Kontrollsystem empfangene Verifizierungsantwort mit der Soll-Verifizierungsantwort zu vergleichen.

Vorzugsweise umfasst das der Aufzugsanlage zugeordnete Kontrollsystem zumindest eine, bevorzugt mehrere, der folgenden Kontrolleinheiten:
- eine ortsgebundene Kontrolleinheit, insbesondere eine Bedieneinheit oder eine Steuereinheit einer Aufzugssteuerung,
- eine mobile Kontrolleinheit, welche über das Kontrollsystem an das Sicherheitssystem angebunden bzw. anbindbar ist, wobei bevorzugt das Kontrollsystem ein internes drahtloses Netzwerk oder eine Schnittstelle zur Anbindung an ein externes drahtloses Netzwerk umfasst, über welches die mobile Kontrolleinheit angebunden bzw. anbindbar ist.

Interne Kontrolleinheiten sind Teil der Aufzugsanlage, während externe Komponenten des Kontrollsystems zwar der Aufzugsanlage zugeordnet sind, aber nicht von dieser umfasst sind.

Vorzugsweise umfasst die zumindest eine Kontrolleinheit:
- Mittel zum Auslesen der Verifizierungsanfrage, insbesondere eine Schnittstelle zum Anschluss einer weiteren Kontrolleinheit oder einer mobilen Freigabevorrichtung zum Auslesen der Verifizierungsantwort, oder ein Display zur visuellen Darstellung der Verifizierungsanfrage, und/oder
- Mittel zur Eingabe der Verifizierungsantwort, insbesondere eine Schnittstelle zum Anschluss einer weiteren Kontrolleinheit oder einer mobilen Freigabevorrichtung zur Eingabe der Verifizierungsantwort oder ein Tastenfeld zur manuellen Eingabe der Verifizierungsantwort, und/oder
- Mittel zum Erzeugen der Verifizierungsantwort, insbesondere einen Schaltkreis oder eine programmierbare Recheneinheit.

Allenfalls weitere erforderliche Komponenten oder synergetische Nutzungen bereits vorhandener Komponenten einer erfindungsgemässen Aufzugsanlage ergeben sich unmittelbar aus der obigen Beschreibung des erfindungsgemässen Verfahrens.

Aus der nachfolgenden Detailbeschreibung und der Gesamtheit der Patentansprüche ergeben sich zudem weitere vorteilhafte Ausführungsformen und Merkmalskombinationen der Erfindung.

Die zur Erläuterung der Ausführungsbeispiele verwendeten Zeichnungen zeigen schematisch:
- Fig. 1:: ein Sicherheitssystem und ein Kontrollsystem einer erfindungsgemässen Aufzugsanlage;
- Fig. 2:: ein Flussdiagramm eines Verfahrens, bei welchem ein Verifizierungskode mit einer Rückstellanfrage vom Sicherheitssystem empfangen wird;
- Fig. 3:: ein Flussdiagramm eines erfindungsgemässen Verfahrens, bei welchem infolge einer Verifizierungsanfrage eine Verifizierungsantwort vom Sicherheitssystem empfangen wird.

Grundsätzlich sind in den Figuren gleiche Teile mit gleichen Bezugszeichen versehen.

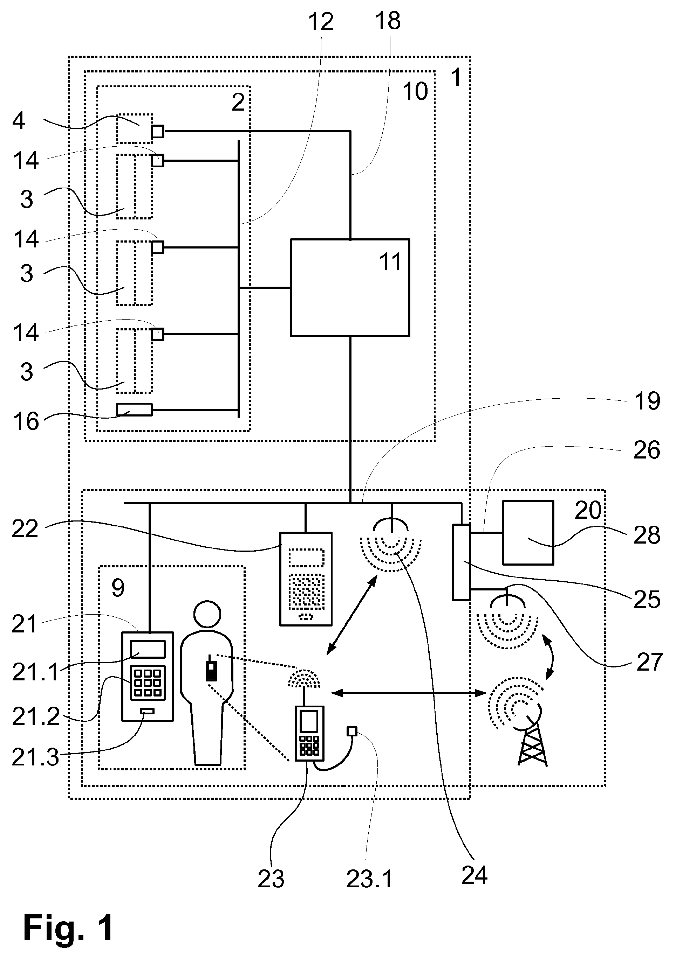

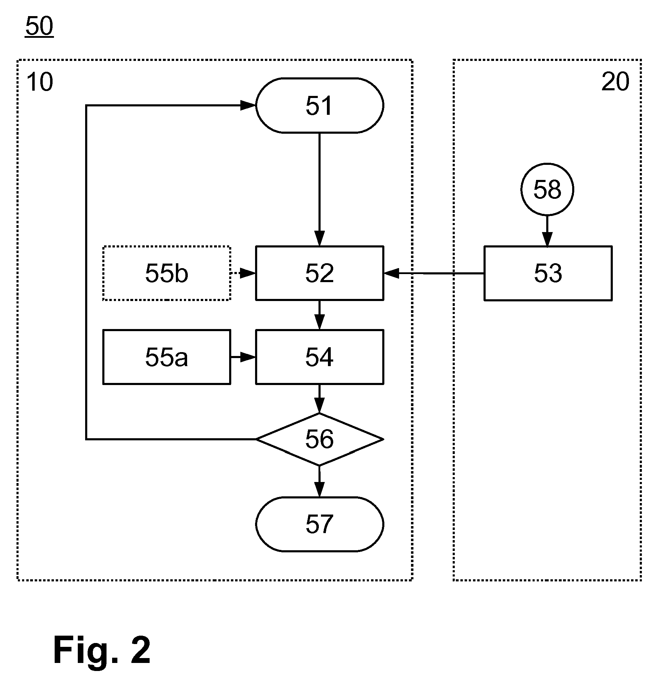

Figur 1 zeigt (gestrichelt angedeutet) einen Aufzugsschacht 2 einer Aufzugsanlage 1. Die Aufzugsanlage 1 weist ein Sicherheitssystem 10 mit einer zentralen Steuereinheit 11 und einem Sicherheitsbus 12 auf. Die Steuereinheit 11 kann als programmierbare Recheneinheit ausgebildet sein bzw. eine derartige Recheneinheit umfassen, womit sich die zur Durchführung des erfindungsgemässen Verfahrens (siehe Fig. 2 - 3) erforderliche Funktionalität z.B. durch eine entsprechende Programmierung bereitstellen lässt. Der Sicherheitsbus 12 kann z.B. als Controller Area Network (CAN-Bus) implementiert sein. Mit dem Sicherheitsbus 12 sind über (nicht dargestellte) Busknoten verschiedene Sicherheitselemente des Sicherheitssystems 10 zur Überwachung der Aufzugsanlage 1 verbunden. Vorliegend sind Türsensoren 14 zur Überwachung von Schachttüren 3 im Liftschacht sowie ein Überfahrschalter 16 dargestellt. Es versteht sich, dass diese Sicherheitselemente rein exemplarisch gewählt sind und in der Praxis eine Vielzahl von weiteren Sicherheitselementen an das Sicherheitssystem 10 angeschlossen sein können.

Alternativ zum Sicherheitsbus 12 können die Sicherheitselemente wie Türsensoren 14, Überfahrschalter 16 oder weitere Sicherheitselemente in einem Sicherheitskreis seriell geschalten sein. Hier ist der Sicherheitskreis mit der Steuereinheit 11 verbunden. Bei einer solchen Lösung werden die Sicherheitselemente üblicherweise nicht einzeln überwacht. Der Sicherheitskreis zeigt pauschal den Zustand aller Sicherheitselemente an. Wenn ein Sicherheitselement einen unsicheren Zustand einnimmt, beispielsweise bei einer geöffneten Schachttüre 3, wird der Sicherheitskreis unterbrochen und zeigt einen unsicheren Zustand der Aufzugsanlage 1 an.

Die Steuereinheit 11 ist z.B. mit einem Antrieb 4 oder einer Bremseinheit der Aufzugsanlage 1 verbunden, um den Fahrbetrieb zu unterbrechen. Dies kann z.B. der Fall sein, wenn das Sicherheitssystem 10 z.B. infolge einer Fehlfunktionsmeldung der Sicherheitselemente oder eines Unterbruchs des Sicherheitskreises in einen Ausnahmezustand gelangt. Vorliegend ist die Steuereinheit 11 über eine separate Leitung 18 mit dem Antrieb 4 verbunden. Die Verbindung kann aber auch über den Sicherheitsbus 12 bereitgestellt sein.

Die Steuereinheit 11 ist über eine Kommunikationsschnittstelle 19 mit einem Kontrollsystem 20 verbunden, welches der Aufzugsanlage 1 zugeordnet ist. Die Kommunikationsschnittstelle 19 kann analog dem Sicherheitsbus 12 als CAN-Bus implementiert sein. Das Kontrollsystem 20 umfasst Teile der Aufzugsanlage 1, kann aber auch externe Komponenten umfassen, welche nicht der Aufzugsanlage 1 zuzurechnen sind. Das Kontrollsystem 20 umfasst verschiedene Kontrolleinheiten 21, 22, 23, 28, welche direkt oder indirekt über die Kommunikationsschnittstelle 19 mit der Steuereinheit 11 und somit mit dem Sicherheitssystem 10 verbunden sind.

Eine der dargestellten Kontrolleinheiten ist als fest in einer Aufzugskabine 9 angeordnete Bedieneinheit 21 (gestrichelt angedeutet) ausgebildet. Die Bedieneinheit 21 weist ein Display 21.1 sowie ein Tastenfeld 21.2 oder z.B. einen Touchscreen zum Auslesen bzw. zur Eingabe von Daten durch einen Benutzer auf. Die Bedieneinheit 21 kann auch eine Schnittstelle 21.3 aufweisen, an welche eine tragbare Vorrichtung wie z.B. einen Dongle oder ein tragbarer Computer anschliessbar ist. Die Schnittstelle 21.3 kann dabei zur Eingabe von Daten und/oder zum Auslesen von Daten aus einer angeschlossenen Vorrichtung ausgebildet sein. Insbesondere kann die Schnittstelle 21.3 auch als Kartenleser für eine Chipkarte ausgebildet sein.

Eine weitere der dargestellten Kontrolleinheiten ist als Steuereinheit 22 einer Aufzugssteuerung ausgebildet. Diese kann an verschiedenen Orten in der Aufzugsanlage 1 angeordnet sein wie beispielsweise im Aufzugsschacht 2, in einem Wartungsraum oder auch z.B. hinter einem Wandpanel in der Aufzugskabine 9. Die Steuereinheit 22 bildet eine Kontrolleinheit, welche grundsätzlich zur automatischen, d.h. von der Steuereinheit 22 selbst durchgeführten, erfindungsgemässen Verifizierung vorgesehen ist. Hierzu kann die Steuereinheit eine entsprechende Schaltung aufweisen, welche für die Verifizierung vorgesehen bzw. entsprechend programmiert ist. Dies schliesst jedoch nicht aus, dass die Steuereinheit 22 ebenfalls Mittel zum Auslesen und/oder Mittel zur Eingabe sowie eine Schnittstelle umfassen kann (gestrichelt angedeutet).

Eine weitere der dargestellten Kontrolleinheiten ist als mobile Kontrolleinheit 23 ausgebildet. Diese kann z.B. ein tragbarer Computer, ein spezielles Wartungsgerät oder ein Mobil-Telefon sein. Die mobile Kontrolleinheit 23 kann von einem Benutzer bei sich getragen werden. Das Kontrollsystem 20 kann ein internes drahtloses Netzwerk 24 aufweisen, welches mit der Kommunikationsschnittstelle 19 und über diese mit dem Sicherheitssystem 10 verbunden ist. Die mobile Kontrolleinheit 23 ist bei entsprechender Ausbildung mit drahtlosen Kommunikationsmitteln über das drahtlose Netzwerk 24 an das Sicherheitssystem 10 angebunden bzw. anbindbar. Die mobile Kontrolleinheit 23 kann aber stattdessen oder zusätzlich auch einen Anschluss 23.1 aufweisen, mit welchem es z.B. über die Schnittstelle 21.3 oder über eine entsprechende Schnittstelle im Kontrollsystem 20 an die Kommunikationsschnittstelle 19 angebunden bzw. anbindbar ist.

Das Kontrollsystem 20 kann weiter eine Schnittstelle 25 für ein externes Netzwerk aufweisen. Über die Schnittstelle 25 kann das Kontrollsystem z.B. mit einem kabelgestützten externen Netzwerk 26 wie dem Internet verbunden sein. Die Schnittstelle 25 kann auch eine Verbindung zu einem externen drahtlosen Netzwerk wie beispielsweise einem Mobilfunknetz 27 bereitstellen. Es versteht sich, dass die externen Netzwerke auch spezielle Netzwerke sein können, welche vom Anlagenbetreiber z.B. zur Fernwartung der Aufzugsanlage 1 bereitgestellt werden. Beispielsweise kann eine externe Wartungszentrale 28 über das kabelgestützte externe Netzwerk 26 an die Schnittstelle 25 angeschlossen sein. In diesem Fall bildet die Wartungszentrale 28 (sowie das externe Netzwerk) eine Komponente des Kontrollsystems 20, welche nicht zur Aufzugsanlage 1 gehört, also eine externe Komponente.

Das externe drahtlose Netzwerk 27 kann zur Anbindung der mobilen Kontrolleinheit 23 genutzt werden. Beispielsweise kann, falls die mobile Kontrolleinheit 23 z.B. ein Mobil-Telefon ist, diese über das Mobilfunknetz 27 mit der Schnittstelle 25 verbunden sein. Mobilfunknetz 27 sowie Mobil-Telefon 23 bilden in diesem Fall externe Komponenten des Kontrollsystems 20.

Figur 2 zeigt ein Flussdiagramm 50 zur Durchführung einer ersten Variante eines Verfahrens im Sicherheitssystem 10 sowie im Kontrollsystem 20. Am Startpunkt 51 befindet sich das Sicherheitssystem 10 in einem Ist-Zustand. In einem ersten Schritt 52 empfängt das Sicherheitssystem 10 eine Rückstellanfrage, welche über eine bzw. von einer internen oder externen Kontrolleinheit 21, 22, 23, 28 des Kontrollsystems 20 in einem Anfrageschritt 53 an das Sicherheitssystem 10 übermittelt wird. Die Rückstellanfrage setzt sich dabei aus einem ersten Teildatensatz zusammen, mit welchem die Rückstellanfrage vom Sicherheitssystem 10 als solche identifizierbar ist. In einem weiteren Teildatensatz kann ein Verifizierungskode enthalten sein, welcher z.B. für jede Rückstellanfrage in einem Erzeugungsschritt 58 von einem System oder einem Benutzer neu generiert wird. Es versteht sich, dass der Verifizierungskode je nach Sicherheitserfordernis dazu geeignet sein muss, eine zuverlässige Verifizierung der Rückstellanfrage zu ermöglichen. Der Verifizierungskode kann hierzu z.B. einer vorgegebenen Liste (Streichliste) entnommen werden oder von einer unabhängigen Vorrichtung in einem zeitlich synchronen Zeitfenster mit einem Soll-Verifizierungskode im Sicherheitssystem 10 generiert werden. Der Verifizierungskode kann auch eine Authentifizierung des Systems oder des Benutzers umfassen.

In einem ersten Verifikationsschritt 54 wird der Verifikationskode vom Sicherheitssystem 10 aus der Rückstellanfrage extrahiert. In einem zweiten Verifikationsschritt 56 wird der extrahierte Verifikationskode mit einem Soll-Verifikationskode verglichen. Der Soll-Verifikationskode kann dabei in einem Erzeugungsschritt 55a während der Durchführung des ersten Verifikationsschritts 54 vom Sicherheitssystem 10 erzeugt werden. Alternativ kann der Soll-Verifikationsschritt bereits während des Schritts 52 beim Empfangen der Rückstellanfrage erzeugt werden (Schritt 55b). Die Erzeugung des Soll-Verifikationskodes kann dabei analog der Erzeugung des Verifikationskodes erfolgen.

Wird im zweiten Verifikationsschritt 56 festgestellt, dass der extrahierte Verifikationskode mit dem Soll-Verifikationskode übereinstimmt, wird die Verifizierung als gültig bewertet. Das Sicherheitssystem 10 stellt sich in der Folge, sofern der Soll-Zustand als sicher bewertet ist, in den Soll-Zustand zurück (Schritt 57). Stimmen Verifikationskode und Soll-Verifikationskode nicht überein, wird die Rückstellanfrage nicht als gültig verifiziert. Das Sicherheitssystem 10 verbleibt in der Folge im Ist-Zustand 51. Gegebenenfalls kann bei ungültiger Verifikation ein Alarm ausgelöst werden, welcher auf die nicht verifizierte Rückstellanfrage und damit auf eine potenzielle Fehlfunktion oder Fehlmanipulation bei der Rückstellanfrage hinweist.

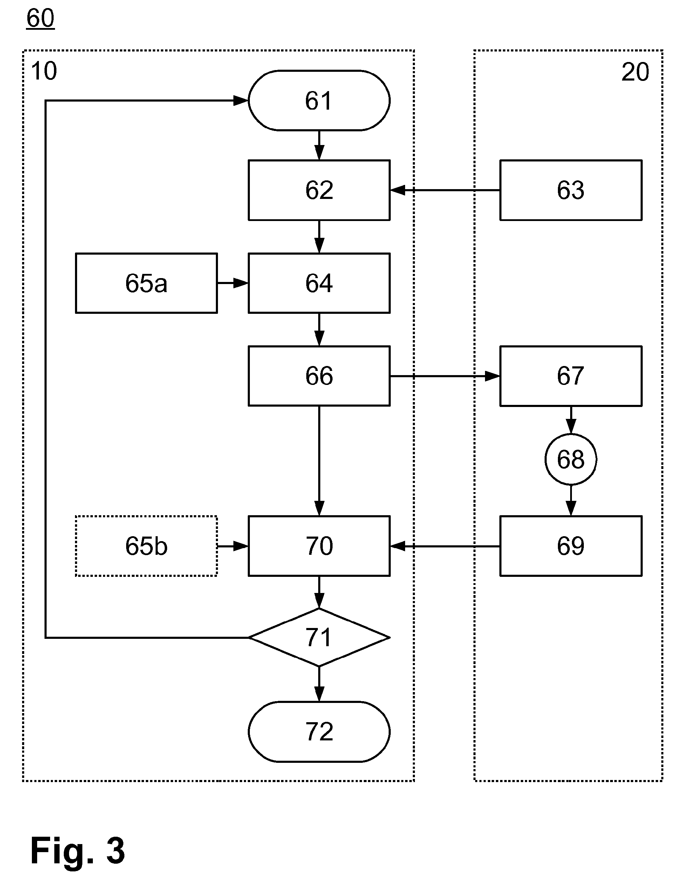

Figur 3 zeigt ein weiteres Flussdiagramm 60 zur Durchführung einer Variante des erfindungsgemässen Verfahrens im Sicherheitssystem 10 sowie im Kontrollsystem 20. Am Startpunkt 61 befindet sich das Sicherheitssystem 10 in einem Ist-Zustand. In einem ersten Schritt 62 empfängt das Sicherheitssystem 10 eine Rückstellanfrage, welche über eine bzw. von einer internen oder externen Kontrolleinheit 21, 22, 23, 28 des Kontrollsystems 20 in einem Anfrageschritt 63 an das Sicherheitssystem 10 übermittelt wird. Die Rückstellanfrage kann in diesem Fall nur einen einzelnen Datensatz umfassen, welcher die Rückstellanfrage einzig als solche identifiziert. Selbstverständlich können auch zusätzliche Daten übertragen werden wie z.B. eine Identifizierung der Kontrolleinheit, von welcher die Rückstellanfrage übermittelt wurde.

Infolge des Empfangens 62 der Rückstellanfrage vom Kontrollsystem 20 erzeugt das Sicherheitssystem 10 in einem Erzeugungsschritt 64 zur Verifizierungsanfrage z.B. einen Fragekode. Gleichzeitig mit dem Erzeugungsschritt kann ein weiterer Erzeugungsschritt 65a durchgeführt werden, mit welchem ein zum Fragekode gehöriger Soll-Antwortkode als Soll-Verifizierungsantwort erzeugt und im Sicherheitssystem gespeichert wird. Fragekode und Soll-Antwortkode können einander dabei eindeutig zugeordnet sein. Nach dem Erzeugen 64 des Fragekodes wird dieser in einem Übermittlungsschritt 66 vom Sicherheitssystem 10 an das Kontrollsystem 20 übermittelt und in diesem Empfangen (Schritt 67). Dabei kann der Fragekode gezielt an eine spezifische Kontrolleinheit 21, 22, 23, 28 des Kontrollsystems 20 übermittelt werden. Diese braucht nicht identisch zu sein mit einer Kontrolleinheit 21, 22, 23, 28, von welcher die Rückstellanfrage an das Sicherheitssystem 10 übermittelt wurde.

Im Kontrollsystem 20 wird infolge des Empfangens 67 des Fragekodes ein Antwortkode als Verifizierungsantwort erzeugt (Schritt 68). Dies kann automatisch durch einen Schaltkreis oder eine entsprechend programmierte Recheneinheit der entsprechenden Kontrolleinheit 21, 22, 23, 28 erfolgen. Alternativ kann hierfür z.B. von einem Benutzer eine unabhängige Freigabevorrichtung (nicht dargestellt) an die entsprechende Kontrolleinheit z.B. über die Schnittstelle 21.3 angeschlossen werden. In einer weiteren Variante wird der Fragekode z.B. visuell an der Kontrolleinheit 21, 22, 23, 28 dargestellt, sofern diese entsprechend ausgebildet ist. Der Fragekode kann in diesem Fall von einem Benutzer ausgelesen werden, um den Antwortkode zu Erzeugen (Schritt 68). Hierzu kann der Benutzer eine Regel zur Erzeugung des Antwortkodes anwenden, die er kennt, oder beispielsweise eine unabhängige Vorrichtung benutzen, welche bei Eingabe des Fragekodes zur Erzeugung des Antwortkodes ausgebildet ist.

In einem Übermittlungsschritt 69 wird der Antwortkode vom Kontrollsystem 20 an das Sicherheitssystem übermittelt. Die hierbei benutzte Kontrolleinheit 21, 22, 23, 28 braucht nicht identisch zu sein mit der Kontrolleinheit 21, 22, 23, 28, von welcher die Rückstellanfrage übermittelt wurde, und auch nicht mit der Kontrolleinheit 21, 22, 23, 28, an welche der Fragekode übermittelt wurde.

In einem Empfangsschritt 70 wird der Antwortkode im Sicherheitssystem 10 empfangen. Alternativ zum Erzeugungsschritt 65a kann der Soll-Antwortkode erst in einem Erzeugungsschritt 65b beim Empfangen 70 des Antwortkodes erzeugt werden.

Der empfangene Antwortkode wird in einem Vergleichsschritt 71 mit dem Soll-Antwortkode verglichen. Wird im Vergleichsschritt 71 festgestellt, dass der Antwortkode mit dem Soll-Antwortkode übereinstimmt, wird die Verifizierung als gültig bewertet. Das Sicherheitssystem 10 stellt sich in der Folge, sofern der Soll-Zustand als sicher bewertet ist, in den Soll-Zustand zurück (Schritt 72). Anderenfalls wird die Rückstellanfrage nicht als gültig verifiziert. Das Sicherheitssystem 10 verbleibt in der Folge im Ist-Zustand 61.

Dem Fachmann erschliessen sich unmittelbar weitere vorteilhafte Varianten zur Durchführung der Verifizierung des erfindungsgemässen Verfahrens.

## Patentansprüche

1. Verfahren zur Rückstellung eines Sicherheitssystems (10) einer Aufzugsanlage (1) aus einem Ist-Zustand (51, 61), in welchem ein Normalbetrieb der Aufzugsanlage (1) nicht freigegeben ist, in einen Soll-Zustand (57, 72), in welchem ein Normalbetrieb der Aufzugsanlage (1) vom Sicherheitssystem (10) freigegeben ist, wobei das Sicherheitssystem (10) über wenigstens eine Kommunikationsschnittstelle (19) zum Datenaustausch mit einem der Aufzugsanlage (1) zugeordneten, insbesondere nicht zum Sicherheitssystem (10) gehörigen, Kontrollsystem (20) verbunden ist, umfassend die Schritte
a.) Empfangen einer aus dem Kontrollsystem übermittelten Rückstellanfrage (52, 62) zur Rückstellung vom Ist-Zustand (51, 61) in den Soll-Zustand (57, 72) im Sicherheitssystem (10),
b.) Durchführung einer Verifizierung der Rückstellanfrage durch das Sicherheitssystem (10),
c.) Bewertung der Verifizierung durch das Sicherheitssystem (10),
d.) Rückstellung des Sicherheitssystems (10) vom Ist-Zustand (51, 61) in den Soll-Zustand (57, 72), wenn die Verifizierung vom Sicherheitssystem (10) als gültig bewertet ist,
**dadurch gekennzeichnet, dass**
die Durchführung der Verifizierung die Schritte umfasst:
a.) Übermitteln einer Verifizierungsanfrage (66), insbesondere eines Fragekodes, vom Sicherheitssystem (10) an das Kontrollsystem (20) infolge der empfangenden Rückstellanfrage,
b.) Empfangen einer vom Kontrollsystem (20) übermittelten Verifizierungsantwort (70), insbesondere eines Antwortkodes, im Sicherheitssystem (10)
und die Verifizierungsanfrage (66) vom Sicherheitssystem (10) zu jeder Rückstellanfrage neu erzeugt wird.

2. Verfahren gemäss Anspruch 1, **dadurch gekennzeichnet, dass** die Bewertung der Verifizierung die Schritte umfasst
a.) Vergleichen der Verifizierungsantwort mit einer Soll-Verifizierungsantwort (56, 71), insbesondere falls die Verifizierungsantwort einen Antwortkode umfasst mit einem Soll-Antwortkode,
b.) Bewerten der Verifizierung als gültig, wenn die Verifizierungsantwort mit der Soll-Verifizierungsantwort übereinstimmt.

3. Verfahren gemäss einem der Ansprüche 1 oder 2, **dadurch gekennzeichnet, dass** die Verifizierungsanfrage vom Sicherheitssystem zu jeder Rückstellanfrage zufällig erzeugt wird.

4. Verfahren gemäss einem der Ansprüche 1, 2 oder 3, **dadurch gekennzeichnet, dass** die Verifizierungsanfrage zu jeder Rückstellanfrage einzigartig ist.

5. Verfahren gemäss einem der Ansprüche 1 bis 4, **dadurch gekennzeichnet, dass** der Verifizierungsanfrage genau eine Soll-Verifizierungsantwort zugeordnet ist.

6. Verfahren gemäss einem der Ansprüche 1 bis 5, **dadurch gekennzeichnet, dass** die Soll-Verifizierungsantwort vom Sicherheitssystem (10) gemäss einer Regel, insbesondere einer Verschlüsselung, aus der Verifizierungsanfrage erzeugt wird, wobei die Soll-Verifizierungsantwort vorzugsweise erst nach Empfangen der Verifizierungsantwort aus der Verifizierungsanfrage erzeugt wird.

7. Verfahren gemäss Anspruch 1 bis 6, wobei das Kontrollsystem zumindest eine der folgenden Kontrolleinheiten umfasst:
- eine ortsgebundene Kontrolleinheit (21, 22, 28), insbesondere eine in einer Aufzugskabine (9) angeordnete Bedieneinheit oder eine Steuereinheit einer Aufzugssteuerung,
- eine mobile Kontrolleinheit (23), welche über das Kontrollsystem (20) an das Sicherheitssystem (10) angebunden bzw. anbindbar ist, wobei bevorzugt das Kontrollsystem (20) eine Anbindung (25) an ein internes (24) oder externes drahtloses Netzwerk (27) umfasst, über welches die mobile Kontrolleinheit (23) angebunden bzw. anbindbar ist, wobei
a.) die Verifizierungsanfrage vom Sicherheitssystem (10) an die zumindest eine Kontrolleinheit übermittelt wird und
b.) die Verifizierungsantwort von der zumindest einen Kontrolleinheit oder von einer weiteren Kontrolleinheit des Kontrollsystems (20) an das Sicherheitssystem (10) übermittelt wird.

8. Verfahren gemäss Anspruch 7, wobei die zumindest eine Kontrolleinheit wenigstens Mittel zum Auslesen (21.1, 21.3) der Verifizierungsanfrage umfasst und die Kontrolleinheit, von welcher die Verifizierungsantwort an das Sicherheitssystem übermittelt wird, wenigstens Mittel zur Eingabe (21.2, 21.3) der Verifizierungsantwort umfassen, wobei die Verifizierungsanfrage über das Mittel zum Auslesen (21.1, 21.3) ausgelesen und die Verifizierungsantwort über das Mittel zur Eingabe(21.2, 21.3) eingegeben wird.

9. Verfahren gemäss Anspruch 7, wobei die zumindest eine Kontrolleinheit Mittel zur Erzeugung einer Verifizierungsantwort aus der Verifizierungsanfrage aufweist, **dadurch gekennzeichnet, dass** die Verifizierungsantwort automatisch bei Empfang der Verifizierungsanfrage von der zumindest einen Kontrolleinheit erzeugt und an das Sicherheitssystem (10) übermittelt wird.

10. Verfahren gemäss einem der Ansprüche 1 bis 9, **dadurch gekennzeichnet, dass** die Durchführung der Verifizierung innerhalb eines vorgegebenen Zeitintervalls erfolgen muss, um als gültig bewertet zu werden.

11. Aufzugsanlage (1), insbesondere zur Durchführung eines Verfahrens gemäss einem der Ansprüche 1 bis 10, umfassend ein Sicherheitssystem (10), welches aus einem Ist-Zustand (51, 61), insbesondere aus einem Zustand, in welchem ein Normalbetrieb der Aufzugsanlage (1) nicht freigegeben ist, in einen Soll-Zustand (57, 72) rückstellbar ist, insbesondere in einen Normzustand, in welchem ein Normalbetrieb der Aufzugsanlage (1) vom Sicherheitssystem (10) freigegeben ist, wobei das Sicherheitssystem (10) über wenigstens eine Kommunikationsschnittstelle (19) zum Datenaustausch an ein der Aufzugsanlage (1) zugeordnetes, insbesondere nicht zum Sicherheitssystem (10) gehöriges, Kontrollsystem (20) angeschlossen ist,
wobei das Sicherheitssystem(10)
a.) Mittel zum Empfangen einer aus dem Kontrollsystem übermittelten Rückstellanfrage zur Rückstellung vom Ist-Zustand in den Soll-Zustand und
b.) Mittel zur Durchführung einer Verifizierung der Rückstellanfrage über das Kontrollsystem sowie
c.) Mittel zur Bewertung einer Gültigkeit der Verifizierung umfasst, und
d.) derart ausgebildet ist, dass das Sicherheitssystem (10) sich infolge einer als gültig bewerteten Verifizierung vom Ist-Zustand (51, 61) in den Soll-Zustand (57, 72) zurückstellt
**dadurch gekennzeichnet, dass**
die Mittel zur Durchführung der Verifizierung Übertragungsmittel zur Übermittlung einer Verifizierungsanfrage an das Kontrollsystem (20) sowie Empfangsmittel zum Empfangen einer Verifizierungsantwort vom Kontrollsystem (20) umfassen und die Mittel zur Durchführung der Verifizierung dazu vorgesehen sind, die Verifizierungsanfrage vom Sicherheitssystem zu jeder Rückstellanfrage neu zu erzeugen.

12. Aufzugsanlage (1) gemäss Anspruch 11, **dadurch gekennzeichnet, dass** das Sicherheitssystem (10)
a.) Mittel zur Erzeugung, insbesondere zur zufälligen Erzeugung, einer Verifizierungsanfrage, insbesondere eines Fragekodes, sowie
b.) Mittel zur Erzeugung einer der Verifizierungsanfrage zugeordneten Soll-Verifizierungsantwort, insbesondere eines dem Fragekode zugeordneten Soll-Antwortkodes, aufweist, und dass
c.) die Mittel zur Bewertung einer Gültigkeit der Verifizierung dazu ausgebildet sind, eine vom Kontrollsystem (20) empfangene Verifizierungsantwort mit der Soll-Verifizierungsantwort zu vergleichen.

13. Aufzugsanlage (1) gemäss Anspruch 11, **dadurch gekennzeichnet, dass** das der Aufzugsanlage (1) zugeordnete Kontrollsystem (20) zumindest eine, bevorzugt mehrere, der folgenden Kontrolleinheiten umfasst:
a.) eine ortsgebundene Kontrolleinheit (21, 22, 28), insbesondere eine in einer Aufzugskabine (9) angeordnete Bedieneinheit (21) oder eine Steuereinheit (22) einer Aufzugssteuerung,
b.) eine mobile Kontrolleinheit (23), welche über das Kontrollsystem (20) an das Sicherheitssystem (10) angebunden bzw. anbindbar ist, wobei bevorzugt das Kontrollsystem (20) ein internes drahtloses Netzwerk (24) oder eine Schnittstelle (25) zur Anbindung an ein externes drahtloses Netzwerk (27) umfasst, über welches die mobile Kontrolleinheit (23) angebunden bzw. anbindbar ist.

14. Aufzugsanlage gemäss Anspruch 13, **dadurch gekennzeichnet, dass** die zumindest eine Kontrolleinheit
a.) Mittel zum Auslesen (21.1, 21.3) der Verifizierungsanfrage, insbesondere eine Schnittstelle (21.3) zum Anschluss einer weiteren Kontrolleinheit oder einer mobilen Freigabevorrichtung zum Auslesen der Verifizierungsantwort, oder ein Display (21.1) zur visuellen Darstellung der Verifizierungsanfrage, und/oder
b.) Mittel zur Eingabe (21.2, 21.3) der Verifizierungsantwort, insbesondere eine Schnittstelle (21.3) zum Anschluss einer weiteren Kontrolleinheit oder einer mobilen Freigabevorrichtung zur Eingabe der Verifizierungsantwort, oder ein Tastenfeld (21.2) zur manuellen Eingabe der Verifizierungsantwort, und/oder
c.) Mittel zum Erzeugen der Verifizierungsantwort, insbesondere einen Schaltkreis oder eine programmierbare Recheneinheit, umfasst.

## Claims

1. Method of resetting a safety system (10) of a lift installation (1) from an actual state (51, 61), in which a normal operation of the lift installation (1) is not released, to a desired state (57, 72), in which a normal operation of the lift installation (1) is released by the safety system (10), wherein the safety system (10) is connected by way of at least one communications interface (19) for data exchange with a control system (20), which is associated with the lift installation (1), but which, in particular, does not belong to the safety system (10), comprising the steps of:
a) receiving a reset request (52, 62), which is transmitted from the control system, for resetting from the actual state (51, 61) to the desired state (57, 72), in the safety system (10),
b) carrying out verification of the reset request by the safety system (10),
c) evaluating the verification by the safety system (10) and
d) resetting the safety system (10) from the actual state (51, 61) to the desired state (57,72) if the verification by the safety system (10) is evaluated as valid.
**characterised in that** the carrying out of verification comprises the steps:
a) transmitting a verification request (66), particularly an enquiry code, from the safety system (10) to the control system (20) in response to the received reset enquiry and
b) receiving in a safety system (10) a verification response (70), in particular a response code, transmitted from the control system (20),
and the verification request (66) is newly generated by the safety system (10) for each reset request.

2. Method according to claim 1, **characterised in that** the evaluation of the verification comprises the steps:
a) comparing the verification response with a target verification response (56, 71), particularly, if the verification response comprises a response code, with a target response code and
b) evaluating the verification as valid if the verification response agrees with the target verification response.

3. Method according to one of claims 1 and 2, **characterised in that** the verification request is randomly generated by the safety system for each reset request.

4. Method according to any one of claims 1, 2 and 3, **characterised in that** the verification request is unique to each reset request.

5. Method according to any one of claims 1 to 4, **characterised in that** exactly one target verification response is assigned to the verification request.

6. Method according to one of claims 1 to 5, **characterised in that** the target verification response is generated by the safety system (10) in accordance with a rule, particularly a coding, from the verification request, wherein the target verification response is generated from the verification request preferably only after receipt of the verification response.

7. Method according to any one of claims 1 to 6, wherein the control system comprises at least one of the following control units:
- a locally fixed control unit (21, 22, 28), particularly an operating unit arranged in a lift cage (9) or a control unit of a lift control, and
- a mobile control unit (23), which is connected or connectible with the safety system (10) by way of the control system (20), wherein the control system (20) preferably comprises a connection (25) with an internal wire-free network (24) or external wire-free network (27), by way of which the mobile control unit (23) is connected or connectible, wherein
a) the verification request is transmitted from the safety system (10) to the at least one control unit and
b) the verification response is transmitted from the at least one control unit or from a further control unit of the control system (20) to the safety system (10).

8. Method according to claim 7, wherein the at least one control unit comprises at least means (21.1, 21.3) for reading out the verification request and the control unit, from which the verification response is transmitted to the safety system, comprises at least means (21.2, 21.3) for input of the verification response, wherein the verification request is read out by way of the means (21.1, 21.3) for reading out and the verification response is input by way of the means (21.2, 21.3) for inputting.

9. Method according to claim 7, wherein the at least one control unit comprises means for generating a verification response from the verification request, **characterised in that** the verification response is automatically generated by the at least one control unit on receipt of the verification request and is transmitted to the safety system (10).

10. Method according to any one of claims 1 to 9, **characterised in that** performance of the verification has to take place within a predetermined time period in order to be evaluated as valid.

11. Lift installation (1), particularly for carrying out a method according to any one of claims 1 to 10, comprising a safety system (10), which is resettable from an actual state (51, 61), particularly from a state in which a normal operation of the lift installation (1) is not released, to a desired state (57, 72), particularly to a normal state in which a normal operation of a lift installation (1) is released by the safety system (10), wherein the safety system (10) is connected by way of at least one communications interface (19) for data exchange with a control system (20) which is associated with the lift installation (1), but which, in particular, does not belong to the safety system (10),
wherein the safety system (10) comprises
a) means for receiving a reset request, which is transmitted from the control system, for resetting from the actual state to the desired state,
b) means for carrying out verification of the reset request by way of the control system and
c) means for evaluating validity of the verification, and
d) is so constructed that the safety system (10) in response to a verification evaluated as valid resets from the actual state (51, 61) to the desired state (57, 72), **characterised in that** the means for carrying out verification comprises transmission means for transmitting a verification request to the control system (20) and receiving means for receiving a verification response from the control system (20) and the means for carrying out the verification are provided for the purpose of newly generating the verification request by the safety system for each reset request.

12. Lift installation (1) according to claim 11, **characterised in that** the safety system (10) comprises
a) means for generation, particularly for random generation, of a verification request, particularly an enquiry code, and
b) means for generation of a target verification response associated with the verification request, particularly a target response code associated with the enquiry code, and that
c) the means for evaluation of validity of the verification is constructed for the purpose of comparing a verification response, which is received from the control system (20), with the target verification response.

13. Lift installation (1) according to claim 11, **characterised in that** the control system (20) associated with the lift installation (1) comprises at least one, preferably a plurality, of the following control units:
a) a locally fixed control unit (21, 22, 28), particularly an operating unit arranged in a lift cage (9) or a control unit of a lift control, and
b) a mobile control unit (23), which is connected or connectible with the safety system (10) by way of the control system (20), wherein the control system (20) preferably comprises an internal wire-free network (24) or an interface (25) for connection with an external wire-free network (27), by way of which the mobile control unit (23) is connected or connectible.

14. Lift installation according to claim 13, **characterised in that** the at least one control unit comprises:
a) means (21.1, 21.3) for reading out the verification request, particularly an interface (21.3) for connection of a further control unit or a mobile release device for reading out the verification response, or a display (21.1) for visual representation of the verification request, and/or
b) means (21.2, 21.3) for input of the verification response, particularly an interface (21.3) for connection of a further control unit or a mobile release device for input of the verification response, or a keypad (21.2) for manual input of the verification response, and/or
c) means for generating the verification response, particularly a circuit or a programmable computer unit.

## Revendications

1. Procédé pour réarmer un système de sécurité (10) d'un ascenseur (1) depuis un état réel (51, 61), dans lequel un fonctionnement normal de l'ascenseur (1) n'est pas validé, vers un état théorique (57, 72), dans lequel un fonctionnement normal de l'ascenseur (1) est validé par le système de sécurité (10), dans lequel le système de sécurité (10) est relié à un système de contrôle (20) associé à l'ascenseur (1), en particulier n'appartenant pas au système de sécurité (10), par l'intermédiaire au moins d'une interface de communication (19) pour l'échange de données, comprenant les étapes suivantes :
a.) la réception d'une demande de réarmement (52, 62) transmise depuis le système de contrôle, pour réarmer le système de sécurité (10) depuis l'état réel (51, 61) vers l'état théorique (52, 72),
b.) l'exécution par le système de sécurité (10) d'une vérification de la demande de réarmement,
c.) l'évaluation par le système de sécurité (10) de la vérification,
d.) le réarmement du système de sécurité (10) depuis l'état réel (51, 61) vers l'état théorique (57, 72) quand la vérification est évaluée comme étant valide par le système de sécurité (10),
**caractérisé en ce**
**que** l'exécution de la vérification comprend les étapes suivantes :
a.) la transmission par le système de sécurité (10) d'une demande de vérification (66), en particulier d'un code d'interrogation, au système de contrôle (20) suite à la réception de la demande de réarmement,
b.) la réception dans le système de sécurité (10) d'une réponse de vérification (70) transmise par le système de contrôle (20), en particulier d'un code de réponse,
et **que** la demande de vérification (66) est renouvelée par le système de sécurité (10) à chaque demande de réarmement.

2. Procédé selon la revendication 1,
**caractérisé en ce que** l'évaluation de la vérification comprend les étapes suivantes :
a.) la comparaison de la réponse de vérification à une réponse de vérification théorique (56, 71), en particulier à un code de réponse théorique si la réponse de vérification comporte un code de réponse,
b.) l'évaluation de la vérification comme étant valide quand la réponse de vérification concorde avec la réponse de vérification théorique.

3. Procédé selon l'une quelconque des revendications 1 ou 2, **caractérisé en ce que** la demande de vérification est produite de manière aléatoire par le système de sécurité à chaque demande de réarmement.

4. Procédé selon l'une quelconque des revendications 1, 2 ou 3, **caractérisé en ce que** la demande de vérification est unique à chaque demande de réarmement.

5. Procédé selon l'une quelconque des revendications 1 à 4, **caractérisé en ce qu'**une réponse de vérification théorique est associée précisément à la demande de vérification.

6. Procédé selon l'une quelconque des revendications 1 à 5, **caractérisé en ce que** la réponse de vérification théorique est produite par le système de sécurité (10) selon une règle, en particulier un cryptage, à partir de la demande de vérification, dans lequel la réponse de vérification théorique est produite à partir de la demande de vérification de préférence à réception seulement de la réponse de vérification.

7. Procédé selon la revendication 1 à 6, dans lequel le système de contrôle comprend au moins une des unités de contrôle suivantes :
- une unité de contrôle (21, 22, 28) spécifique au lieu, en particulier une unité d'utilisation disposée dans une cabine d'ascenseur (9) ou une unité de commande d'une commande d'ascenseur,
- une unité de contrôle (23) mobile, qui est connectée ou peut être connectée au système de sécurité (10) par l'intermédiaire du système de contrôle (20), dans lequel de manière préférée le système de contrôle (20) comprend une connexion (25) à un réseau interne (24) ou à un réseau externe sans fil (27), par l'intermédiaire duquel l'unité de contrôle (23) mobile est connectée ou peut être connectée, dans lequel
a.) la demande de vérification est transmise par le système de sécurité (10) à l'au moins une unité de contrôle et
b.) la réponse de vérification est transmise au système de sécurité (10) par l'au moins une unité de contrôle ou par une autre unité de contrôle du système de contrôle (20).

8. Procédé selon la revendication 7, dans lequel l'au moins une unité de contrôle comprend au moins des moyens de lecture (21.1, 21.3) de la demande de vérification et l'unité de contrôle, depuis laquelle la réponse de vérification est transmise au système de sécurité, comprend au moins des moyens de saisie (21.2, 21.3) de la réponse de vérification, dans lequel la demande de vérification est lue par l'intermédiaire du moyen de lecture (21.1, 21.3) et la réponse de vérification est saisie par l'intermédiaire du moyen de saisie (21.2, 21.3).

9. Procédé selon la revendication 7, dans lequel l'au moins une unité de contrôle présente des moyens pour produire une réponse de vérification à partir de la demande de vérification, **caractérisé en ce que** la réponse de vérification est produite par l'au moins une unité de contrôle automatiquement à réception de la demande de vérification et est transmise au système de sécurité (10).

10. Procédé selon l'une quelconque des revendications 1 à 9, **caractérisé en ce que** l'exécution de la vérification doit être effectuée dans un laps de temps prédéfini pour être évaluée comme étant valide.

11. Ascenseur (1), en particulier pour exécuter un procédé selon l'une quelconque des revendications 1 à 10, comprenant un système de sécurité (10), qui peut être réarmé depuis un état réel (51, 61), en particulier depuis un état, dans lequel un fonctionnement normal de l'ascenseur (1) n'est pas validé, vers un état théorique (57, 72), en particulier dans un état standard, dans lequel un fonctionnement normal de l'ascenseur (1) est validé par le système de sécurité (10), dans lequel le système de sécurité (10) est raccordé à un système de contrôle (20) associé à l'ascenseur (1), en particulier n'appartenant pas au système de sécurité (10) par l'intermédiaire au moins d'une interface de communication (19) pour l'échange de données,
dans lequel le système de sécurité (10) comprend
a.) des moyens pour recevoir une demande de réarmement transmise depuis le système de contrôle, aux fins du réarmement depuis l'état réel vers l'état théorique, et
b.) des moyens pour exécuter une vérification de la demande de réarmement par l'intermédiaire du système de contrôle, ainsi que
c.) des moyens pour évaluer une validité de la vérification, et
d.) est réalisé de telle manière que le système de sécurité (10) revient, suite à une vérification évaluée comme étant valide, de l'état réel (51, 61) vers l'état théorique (57, 72),
**caractérisé en ce**
**que** les moyens pour exécuter la vérification comprennent des moyens de transmission pour transmettre une demande de vérification au système de contrôle (20) ainsi que des moyens de réception pour recevoir une réponse de vérification du système de contrôle (20), et en ce que les moyens pour exécuter la vérification sont en outre prévus pour renouveler la demande de vérification par le système de sécurité à chaque demande de réarmement.

12. Ascenseur (1) selon la revendication 11, **caractérisé en ce que** le système de sécurité (10) présente
a.) des moyens pour produire, en particulier pour produire de manière aléatoire, une demande de vérification un code d'interrogation, ainsi que
b.) des moyens pour produire une réponse de vérification théorique associée à la demande de vérification, en particulier un code de réponse théorique associé au code d'interrogation, et **en ce que**
c.) les moyens pour évaluer une validité de la vérification sont réalisés pour comparer une réponse de vérification reçue par le système de contrôle (20) à la réponse de vérification théorique.

13. Ascenseur (1) selon la revendication 11,
**caractérisé en ce**
**que** le système de contrôle (20) associé à l'ascenseur (1) comprend au moins une, de préférence plusieurs, unité(s) de contrôle suivante(s):
a.) une unité de contrôle (21, 22, 28) spécifique au lieu, en particulier une unité d'utilisation (21) disposée dans une cabine d'ascenseur (9) ou une unité de commande (22) d'une commande d'ascenseur ;
b.) une unité de contrôle mobile (23), qui est connectée ou peut être connectée au système de sécurité (10) par l'intermédiaire du système de contrôle (20), dans lequel de manière préférée le système de contrôle (20) comprend un réseau interne sans fil (24) ou une interface (25) destinée à la connexion à un réseau externe sans fil (27), par l'intermédiaire duquel l'unité de contrôle mobile (23) est connectée ou peut être connectée.

14. Ascenseur selon la revendication 13,
**caractérisé en ce que** l'au moins une unité de contrôle comprend
a.) des moyens de lecture (21.1, 21.3) de la demande de vérification, en particulier une interface (21.3) servant au raccordement d'une autre unité de contrôle ou d'un dispositif de validation mobile pour lire la réponse de vérification, ou un écran (21.1) pour afficher visuellement la demande de vérification, et/ou
b.) des moyens de saisie (21.2, 21.3) de la réponse de vérification, en particulier une interface (21.3) servant au raccordement d'une autre unité de contrôle ou d'un dispositif de validation mobile pour saisir la réponse de vérification, ou un clavier (21.2) pour saisir manuellement la réponse de vérification, et/ou
c.) des moyens pour produire la réponse de vérification, en particulier un circuit ou une unité de calcul programmable.
